# EUROPEAN PATENT SPECIFICATION

(11) **EP 2 136 380 B1**
(45) Date of publication and mention of the grant of the patent: **06.01.2016**
(21) Application number: 09156111.8
(22) Date of filing: 25.03.2009
(51) Int. Cl.: C23C 24/04, H01G 9/045, H01G 4/12, H01G 9/04, H01G 9/00

(54) **A SPRAYING METHOD FOR MANUFACTURING A CAPACITOR AND CAPACITOR OBTAINED BY THE METHOD**
SPRITZVERFAHREN ZUR HERSTELLUNG EINES KONDENSATORS UND DURCH DIESES VERFAHREN HERGESTELLTER KONDENSATOR
METHODE DE PULVERISATION POUR LA FABRICATION DE CONDENSATEURS ET CONDENSATEURS OBTENUS PAR LADITE METHODE

(30) Priority: 20.06.2008 JP 2008162503
(43) Date of publication of application: 23.12.2009
(73) Proprietor: Fujitsu Limited, Kawasaki-shi, Kanagawa 211-8588 (JP)
(72) Inventor: Imanaka, Yoshihiko, Kanagawa 211-8588 (JP)
(74) Representative: Stebbing, Timothy Charles

(56) References cited:
- EP-A- 0 094 873
- WO-A-03/088358
- GB-A- 2 332 089
- JP-A- 2008 021 895
- US-A- 3 864 715
- US-A- 4 359 414
- US-A- 5 136 474
- US-A1- 2005 168 919

## Description

The present invention is related to a method for manufacturing a capacitor having a dielectric layer formed by a composite of a conductor and a dielectric, and to such a capacitor, as well as to a structural body and its manufacturing method suitable for other types of electrical device apart from capacitors.

A capacitor in the form of a decoupling capacitor for suppressing noise generated by an electronic device, a coupling capacitor for eliminating the difference in DC potential between electronic devices, and a structural component of a filter is an indispensable component of electronic devices. A remarkable progress was achieved in recent years in miniaturization of electronic devices, and there is a growing demand for miniaturization of capacitors matching that of electronic devices.

Capacitor types suitable for miniaturization are ceramic capacitors and aluminum electrolytic capacitors. Because these capacitors have a high capacitance per unit volume, they maintain high capacitance even upon miniaturization.

In a ceramic capacitor, a dielectric layer (insulating layer provided between opposing electrodes of a capacitor) is formed from a ferroelectric such as barium titanate to ensure the necessary capacitance. Japanese Laid-open Patent Application No.05-47589 discloses a ceramic capacitor including strontium titanate. In order to further increase the capacitance, in a multilayer ceramic capacitor, more electrodes and dielectric layers are alternately laminated. In an aluminum electrolytic capacitor, the surface area of an anode foil is enlarged by roughening and a high capacitance is realized. In document JP2008021895 a dielectric layer constitued by rare earth element oxide is formed by the thermal spraying method.

However, in any of the aforementioned capacitors, a complex and accurate manufacturing process has to be performed to increase capacitance. As a result, the production cost increases when the aforementioned capacitors are to be produced to have high capacitance.

Accordingly, it is desirable to provide an electrical element having improved properties, such as a high-capacitance and small-size capacitor that can be formed by a simple and inexpensive manufacturing process, and to provide a method for manufacturing such a capacitor or element.

According to an aspect of the invention, a method for manufacturing a deposited film includes: directing conductive particles onto a substrate by ejecting the conductive particles together with a gas, the surface of the conductive particles being entirely covered with a dielectric; fixing the conductive particles to the substrate with the surface of the conductive particles still covered with the dielectric by colliding the conductive particles with the substrate; and sandwiching a deposited film formed of the conductive particles fixed to the substrate between electrodes.

Another aspect of the present invention provides a structural body formed by colliding conductor particles with a substrate, each surface of the conductor particles covered with a dielectric entirely, to fix the conductor particles to the substrate with each surface of the conductor particles still covered with the dielectric entirely. Such a structural body may be used as an electrical element of, for example, a capacitor.

It is to be understood that both the foregoing general description and the following detailed description are exemplary and explanatory and are not restrictive of the invention, as claimed.

Reference is made, by way of example only, to the accompanying drawings in which:
FIG. 1 is a cross-sectional view of a deposited film obtained by a gas deposition method using Al powder, in which surfaces of particles are covered with aluminum oxide, as a starting material powder, this view representing specific features of the image observed under a transmission electron microscope;
FIG. 2 is a schematic view explaining the state of a conductor particle covered over the surface thereof with a dielectric film prior to deposition;
FIG. 3 is a flowchart illustrating a procedure of the method for manufacturing a capacitor according to the embodiment 1.
FIG. 4 is a schematic cross-sectional view of a capacitor according to the embodiment 1.
FIG. 5 is a schematic cross-sectional view of a BL capacitor.
FIG. 6 illustrates an equivalent circuit of the BL capacitor.
FIG. 7 is a schematic cross-sectional view of a capacitor according to the embodiment 2.
FIG. 8 is a diagram illustrating features of an image obtained by observing a cross section of the structural body according to the embodiment 2 under a transmission electron microscope.
FIG. 9 is a flowchart illustrating a procedure of the method for manufacturing method according to the embodiment 1.
FIG. 10 is a structural drawing of a film formation apparatus in the embodiment 1;
FIG. 11 is a cross-sectional view of a capacitor according to the embodiment 1;
FIG. 12 is a cross-sectional view of the capacitor according to the embodiment 2;
FIG. 13 is a perspective view illustrating an external appearance of a capacitor according to the embodiment 3;
FIG. 14 is a view obtained by observing the inside of the capacitor according to the embodiment 3 through an outer case;
FIG. 15 illustrates a transverse sectional view of the principal parts (dielectric layers and electrodes) of the capacitor according to the embodiment 3;
FIG. 16 is a cross-sectional view of a capacitor of the embodiment 4;
FIG. 17 is a block diagram of the electronic device according to the embodiment 5;
FIG. 18 is a schematic cross-sectional view of the electronic device according to the embodiment 5;
FIG. 19 is a perspective view illustrating the internal configuration of a capacitor according to the modification example 1; and
FIG. 20 is a schematic diagram illustrating a cross section of a deposited film (structural body) obtained by peeling a deposited film formed by the gas deposition method from a substrate and polishing the upper surface and lower surface of the deposited film.
Fig.21 is a table illustrating data relating to the Example 1 and Example 2 (Table 1).
Fig.22 is a table illustrating data relating to the Example 3 and Example 4 (Table 2).

The inventors have conducted a comprehensive research of a method for forming films by which a powder comprising aggregated fine particles is ejected together with gas and fixed to a substrate (referred to hereinbelow as a gas deposition method). In the course of the research, the inventors formed a metal film by using conductor particles (conductive particles), the surfaces of which are (the outer surface of each being) covered with dielectric films,(for example, surface-oxidized Al particles) as a starting material powder and studied the structure and physical properties thereof.

With the gas deposition method fine particles are accelerated by gas to a velocity equal to or higher than sound velocity and collide violently with a substrate. Due to the impact during collision, the fine particles are fixed to the substrate and a thick film is formed.

In this case, fine particles that have been fixed to the substrate do not retain their original form and are deformed due to impact during collision. Therefore, it is unclear whether the dielectric films that covered the surfaces of conductor particles still cover the surfaces of conductor particles even after collision, or whether the dielectric films are broken through and the fine metal particles are fixed to each other.

Concerning this issue, researchers specializing in gas deposition think that the particles are fixed to each other because active new surfaces that were located inside the particles are exposed on the surfaces during the impact.

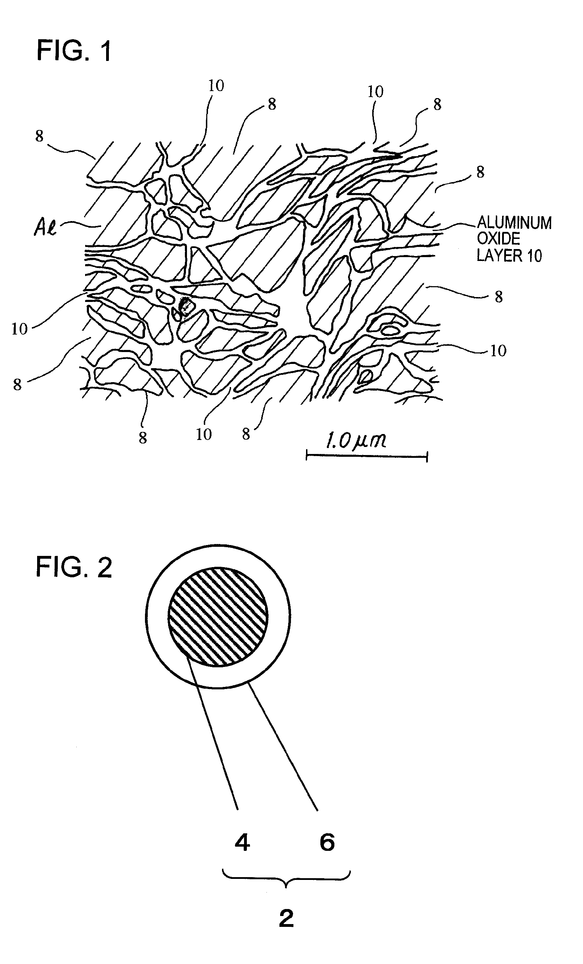

FIG. 1 is a cross-sectional view of a deposited film obtained by fixing an Al powder, in which the surfaces of the particles are covered with aluminum oxide, to an aluminum foil by a gas deposition method, this view representing specific features of the image observed under a transmission electron microscope. The Al powder used for forming the deposited film is an aggregation of Al particles with a mean particle size of 3 µm ± 1 µm (the digit after ± represents a standard deviation), the surfaces of which are covered with aluminum oxide with a thickness of 10 to 100 nm. In this case, film formation conditions are identical to those of the below-described Example 1. The mean particle size of Al particles is measured by a centrifugal separation and precipitation method.

FIG. 2 is a schematic view explaining the state of fine particle prior to deposition. As depicted in FIG. 2, a fine particle 2 forming a starting material powder has a conductor particle 4 (here, an Al particle) covered over the entire surface thereof with a dielectric 6 (in this case, aluminum oxide). The fine particle 2 has a generally spherical shape.

However, in the deposited film formed by collision of fine particles 2 with a substrate, the Al particle 8 is greatly deformed, as depicted in FIG. 1. At the same time, individual Al particles 8 are separated, and an aluminum oxide layer 10 is introduced between the particles. Thus, in the deposited film, the entire surface of Al particles 8 (metal particles) is covered with aluminum oxide (dielectric).

The film formation method explained with reference to FIG. 1 and FIG. 2 is based on a mechanism by which plasticity of the metal constituting the core portion of the particles is used and individual particles are plastically deformed to a degree such that the dielectric film formed on the particle surface is not fractured, whereby individual particles are integrated and fixed to each other, rather than on a film formation mechanism by which strong impacts are applied and particles are strongly attached to each other. Thus, with the present method, a film is formed from fine particles by using plastic deformation of the metal.

The inventors then studied electrical properties of such a deposited film. A structure in which individual Al particles 8 are separated by the electrically insulating aluminum oxide film 10 suggests that the deposited film is an insulating film with a very high resistivity.

Having obtained the above-described results, the inventors conceived of using the aforementioned deposited film as an element of an electrical device and in particular, as a dielectric layer of a capacitor. Accordingly, the inventors formed a metal electrode on the upper surface of the deposited film, formed a capacitor in which the metal electrode serves as an upper electrode and the substrate made from an aluminum foil serves as a lower electrode, and measured capacitance (capacitance density) per unit area. The thickness of the deposited film was 250 µm.

The measurements yielded a very high value of 30 µF/cm² that exceeds the capacitance density of conventional capacitors. For example, even in a ceramic capacitor with barium titanate having a high dielectric constant as a dielectric layer and a thickness of the dielectric layer as small as 1 µm, the capacitance density is only 2.5 µF/cm².

Furthermore, the gas deposition method is a simple and inexpensive method for producing thick films. On the basis of the above-described information, the inventors conceived of a capacitor having a deposited film formed by the gas deposition method as a dielectric layer.

Furthermore, having performed detailed observations of the structure depicted in FIG. 1, the inventors discovered that huge electrostatic capacitance can be attained with a structural body in which a dielectric film covering the surfaces of metal particles is formed continuously. In the above-described example, it can be said that the aforementioned structure is formed using the gas deposition method to realize such a structural body.

However, the aforementioned structural body can be formed not only by the gas deposition method, but also by a cold spraying method and a shot coating method. Furthermore, it can be also realized by CIP, HIP, hot pressing, and cold pressing, which are molding methods in which a compressive stress is applied with a high-pressure press.

Thus, the aforementioned structural body may be formed by any method, provided that the dielectric layer formed on the metal powder surface is not fractured and that the metal powder can be confined in the structural body wherein a dielectric film is formed continuously.

In other words, the example explained with reference to FIG. 1 suggests that gas deposition method is an effective film formation method for forming the aforementioned structural body.

### (Embodiment 1)

The present embodiment relates to a method for manufacturing a deposited film as claimed in claim 1 by which a dielectric layer is formed by ejecting, together with gas, conductor particles covered over the entire surface thereof with (i.e., encased in) a dielectric and causing the particles to collide with a substrate.

### (1) Manufacturing Method

First, a method for manufacturing a capacitor according to claim 3

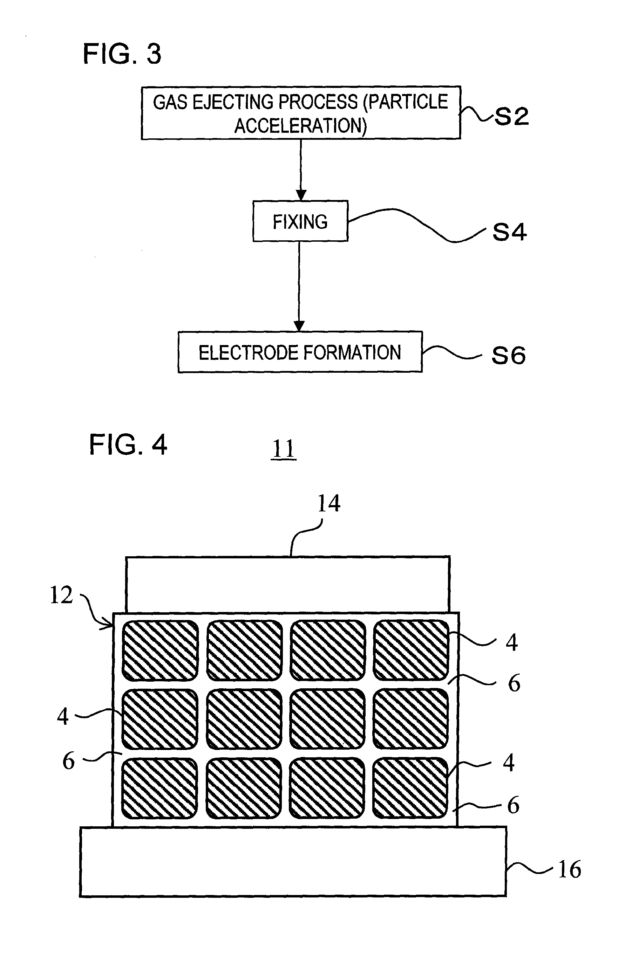

FIG. 3 is a flowchart illustrating a procedure of the method for manufacturing a capacitor according to the present embodiment.

### (i) Step S2

In the present step, conductor particles 4 covered on their outer surface with a dielectric 6 (see FIG. 2) are ejected together with gas and accelerated. In this case, the preferred conductor is a valve metal such as aluminum, titanium, zirconium, magnesium, silicon, iron, tantalum, hafnium that makes it possible to form an insulating oxidation film by thermal oxidation or electrochemical treatment.

Furthermore, surface thermal oxidation of conductor particles, dielectric coating using an alkoxide, surface wet treatment using a metal salt, vapor-phase coating, electrochemical conversion treatment, and the like can be also used to cover the entire surface of conductor particles with a dielectric film.

### (ii) Step S4

The accelerated conductor particles are then caused to collide with a substrate, and the conductor particles are fixed to the substrate in a state in which each surface of the conductor particles (for example, aluminum particles 8) is still covered with a dielectric entirely (for example, aluminum oxide 10) (see FIG. 1).

In this process, neither the substrate nor the conductor particles are subjected to heating. As a result, the temperature of the film formed by the conductor particles during deposition is obviously lower than the melting point of the conductor particles. Therefore, the metal conductor particle of the core portion is plastically deformed by the impact during collision and the conductor particle is fixed to the substrate, rather than the conductor particle becoming fixed to the substrate after being melted. However, it goes without saying that the substrate or conductor particles may be heated as long as the dielectric 6 does not disappear because of reduction or the like.

Whether the surfaces of conductor particles in the deposited film are covered entirely with a dielectric can be verified by observing a cross section of the deposited film under a transmission electron microscope. In other words, the present step is a process in which the conductor particles are fixed to the substrate so that the entire surface of the conductor particles 8 is covered with a dielectric, when a cross-section of the deposited film is observed under a transmission electron microscope.

### (iii) Step S6

In the present step, a capacitor is formed by sandwiching the deposited film formed by the fixed conductor particles between electrodes.

### (2) Configuration

FIG. 4 is a schematic cross-sectional view of a capacitor 11 according to the present embodiment.

As depicted in FIG. 4, the capacitor 11 according to the present embodiment has a structural body 12 formed by a process in which conductor particles 4 each covered in the dielectric 6 collide with the substrate and are fixed to the substrate in a state in which the surfaces of the conductor particles remain covered with the dielectric 6 entirely. Here, the structural body 12 is a deposited film formed in the above-described step S4.

In the capacitor 11 according to the present embodiment, the structural body 12 is sandwiched between electrodes 14, 16. In this case, the substrate used for depositing the conductor particles may be made from a metal and such a substrate may be used as the lower electrode 16. Alternatively, the deposited film may be peeled off the substrate and the lower electrode 16 may be formed on the exposed surface.

### (3) Operation

The capacitor according to the present embodiment is mounted on an electric circuit and used upon connecting a pair of wirings of the electric circuit to electrodes 14, 16. A difference in electric potential between the wirings appears between the electrodes 14, 16, and an electrical charge is induced at the electrodes 14, 16 in response to this difference in electric potential. In this case, because the structural body 12 is present between the electrodes, the electrical charge induced at the electrodes 14, 16 becomes remarkably high and a high capacitance is realized.

### (4) Comparison with a grain boundary insulation-type semiconductor capacitor

As described hereinabove, the capacitor according to the present embodiment has a very high capacitance density. It is presently unclear why such a high capacitance density can be obtained (one of the possible explanations is that a thin dielectric layer formed on the metal particle surface is formed three dimensionally inside the formed structural body (film and the like)). However, a capacitor using a composite material (in the present embodiment, a composite material of Al and aluminum oxide) as a dielectric layer, in the same manner as the capacitor of the present embodiment, is a grain boundary insulated semiconductor capacitor (Barrier Layer Capacitor; will be referred to hereinbelow as BL capacitor).

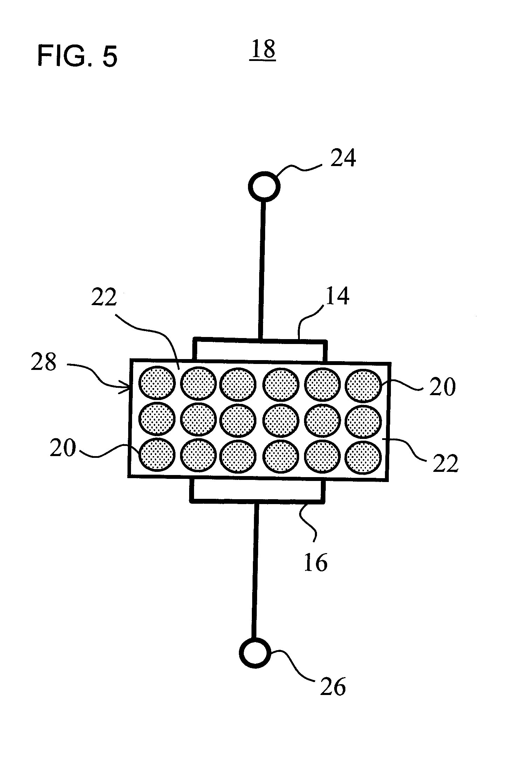

FIG. 5 is a schematic cross-sectional view of a BL capacitor.

A dielectric layer of a BL capacitor 18 is formed using barium titanate particles or strontium titanate particles as a base material. Here, the configuration of a BL capacitor will be explained following the manufacturing method thereof by considering a BL capacitor using barium titanate particles as the base material by way of example.

Initially, a molded body is produced from barium titanate particles. The molded body is then subjected to reduction treatment and the barium titanate particles are converted into a semiconductor. Then, CuO, PbO, Bi₂O₃, or the like is coated on the molded body. The molded body coated with the CuO, PbO, Bi₂O₃, or the like is thereafter subjected to heat treatment.

As a result of the heat treatment, CuO, PbO, and Bi₂O₃ diffuse to the grain boundaries of the barium titanate particles 20 converted into a semiconductor, and a layer 22 of a thin dielectric containing CuO, PbO, and Bi₂O₃ as the base material is formed between the particles 20 (FIG. 5). An upper electrode 14 and a lower electrode 16 are formed respectively on the upper surface and lower surface of the dielectric layer 28 that has thus been formed. Terminals 24 and 26 are then connected to respective electrodes, thereby completing the formation of a BL capacitor.

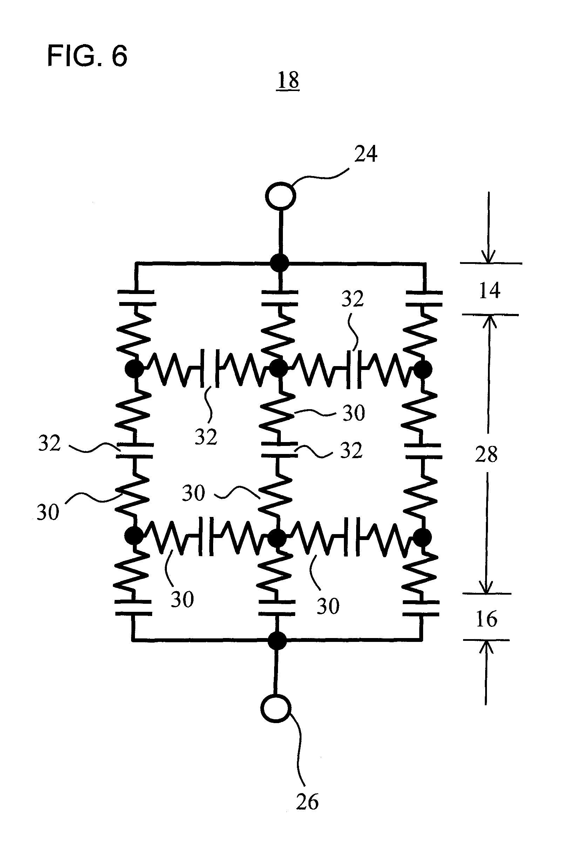

FIG. 6 illustrates an equivalent circuit of the BL capacitor. A circuit corresponding to each member (upper electrode 14, dielectric layer 28, and lower electrode 16) are assigned with reference symbols that have been assigned to respective members. As depicted in FIG. 6, in the equivalent circuit corresponding to the dielectric layer 28, a resistor 30 corresponding to the barium titanate particles 20 converted into a semiconductor and a very small capacitor 32 corresponding to the layer 22 of a thin dielectric containing CuO, PbO, Bi₂O₃, or the like as the base material are connected in a network manner.

A resistance component of the capacitor consumes electric power inputted to the capacitor and causes loss in the capacitor. Thus, the resistor 30 originating in the barium titanate particles 20 converted into a semiconductor (referred to hereinbelow as BaTiO₃ particles converted into a semiconductor) causes loss in the BL capacitor. Where the resistance value of the BaTiO₃ particles 20 converted into a semiconductor is sufficiently small, this loss can be ignored. However, the resistance ratio of the BaTiO₃ particles 20 converted into a semiconductor is in the order of 10⁻¹ Ω·cm, that is, high and cannot be ignored. For this reason, a problem of large loss is associated with the BL capacitor.

By contrast, in the capacitor in accordance with the embodiments, because the dielectric layer is formed by conductor (conductive) particles, the loss is very small.

Another problem associated with the BL capacitor is that the capacitor is difficult to miniaturize because the dielectric layer 28 is difficult to decrease in thickness. By contrast, the capacitor according to the present embodiment can be easily miniaturized.

When the BL capacitor is formed, the diameter of BaTiO₃ particles 20 is always equal to or larger than 50 µm. As a result, the BL capacitor thickness is equal to or larger than 400 µm in the dielectric layer 28 alone. Such a thick dielectric layer is contrary to the demand for capacitor miniaturization, and this is why BL capacitors are hardly used in electronic devices.

Furthermore, due to specific features of the method for manufacturing a BL capacitor, a dielectric layer has to be formed by causing fluidized CuO or the like to diffuse into gaps between barium titanate particles converted into a semiconductor. As a result, a material that has a low melting point and can be easily caused to diffuse and fluidized has to be used for the dielectric material.

Hazardous substances such as lead are sometimes employed as the main components in such dielectric materials having a low melting point. As a result, Pb vapor is generated in the manufacturing process. Accordingly, the use of BL capacitors has also been restricted in view of hazardous substance regulations.

A dielectric layer of a BL capacitor is formed by a dielectric layer that is a composite of a semiconductor and a dielectric. In the capacitor according to the present embodiment, a dielectric layer is also formed by a composite of a conductor and a dielectric. Therefore, comparison with the example of the BL capacitor suggests that the capacitor according to the present embodiment will be also difficult to be miniaturized.

However, when the inventors actually attempted to manufacture the capacitor, the capacitor according to the present embodiment could be formed with a thickness of a dielectric layer of less than 400 µm and had sufficient capacitance. For example, it is even possible to form a dielectric layer with a thickness of several microns.

Thus, with the capacitor according to the present embodiment, a small-size and high-capacitance capacitor can be easily realized even when the dielectric layer is formed from a composite material.

Furthermore, a BL capacitor is difficult to integrate on a printed circuit board, whereas the capacitor according to the present embodiment can be easily integrated on a printed circuit board.

As described hereinabove, the treatment performed to convert BaTiO₃ particles or the like into a semiconductor and the CuO diffusion treatment require heating. A printed circuit board may not withstand such heating. On the other hand, the capacitor according to the present embodiment can be formed at room temperature and can be easily integrated on a printed circuit board.

A ceramic capacitor is known as a capacitor adapted to miniaturization. However, as will be described below, a complex and costly process is required to increase the capacitance of a ceramic capacitor. By contrast, the capacitor according to the present embodiment can be formed by a simple and inexpensive process. In this aspect, the capacitor according to the present embodiment is also superior to the aforementioned conventional capacitors.

The capacitance of ceramic capacitors is increased by alternately laminating a large number of dielectric layers (ceramic layers) and electrodes. A high-capacitance ceramic capacitor thus produced is called "multilayer ceramic capacitor". Because multilayer ceramic capacitors have such a complex structure, the production cost thereof is always high.

By contrast, because the capacitor according to the present embodiment is manufactured by one cycle of gas deposition and electrode formation, the production cost thereof is low.

In addition to multilayer ceramic capacitors, aluminum electrolytic capacitors also have high capacitance. However, when aluminum electrolytic capacitors are produced, chemical reagents are used for example for etching an aluminum foil, and a large amount of toxic waste water is generated. Thus, aluminum electrolytic capacitors have a high environmental load. By contrast, practically no hazardous substances are generated in the process of manufacturing the capacitor according to the present embodiment. Thus, the capacitor according to the present embodiment has a very small environmental load.

### Embodiment 2

The present embodiment relates to a method for manufacturing a capacitor (and to the capacitor thus made) by ejecting conductor particles each entirely covered with a dielectric together with dielectric particles in the method of embodiment 1.

### (1) Manufacturing Method

A capacitor according to the present embodiment is manufactured by successively implementing the following three processes: a gas ejecting process (step S2), a fixation process (step S4), and an electrode formation process (step S6), in the same manner as in Embodiment 1.

In the present embodiment, the gas ejecting process (acceleration process) is a process in which conductor particles (for example, Al particles) coated all over with a dielectric (for example, aluminum oxide) are ejected, with gas, together with dielectric particles (for example, BaTiO₃ particles) and accelerated with the dielectric particles. In other respects, the gas ejecting process of the present embodiment is identical to step S2 of Embodiment 1.

In the fixation process, the dielectric particles are caused together with the conductor particles to collide with a substrate. In other respects, the fixation process of the present embodiment is identical to step S4 of Embodiment 1.

The electrode formation process is identical to step S6 of Embodiment 1.

### (2) Configuration

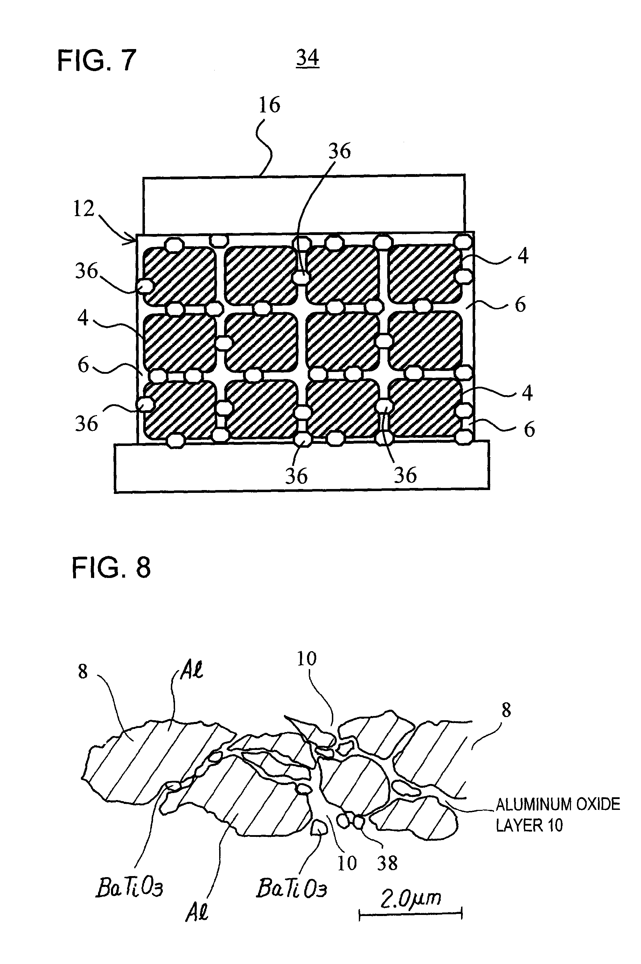

FIG. 7 is a schematic cross-sectional view of a capacitor according to the present embodiment.

In a structural body 12 (that forms a dielectric layer of a capacitor) of a capacitor of 34 according to the present embodiment, dielectric particles 36 are present between the conductor particles 4. In other respects, the capacitor according to the present embodiment is identical to the capacitor 11 according to Embodiment 1 (see FIG. 4 and FIG. 7).

FIG. 8 is a diagram illustrating features of an image obtained by observing a cross section of the structural body 12 according to the present embodiment under a transmission electron microscope. An example depicted in FIG. 8 is a cross-sectional image of a structural body formed by a gas deposition method using a mixed powder of barium titanate (BaTiO₃) and an Al powder, in which the surfaces of the Al particles are covered with aluminum oxide, as a starting material powder. Here, the thickness of aluminum oxide is 10 to 100 nm, and the particle size of the Al powder is 3 µm ± 1 µm. The particle size of barium titanate (BaTiO₃) is 100 nm. The volume ratio of barium titanate in the mixed powder is 5% (represented hereinbelow by 5 vol%). The specific film formation conditions are identical to those of the below-described Example 2.

As depicted in FIG. 8, in the structural body formed by gas deposition, Al particles 8 are greatly deformed. Furthermore, individual Al particles 8 are separated, and an aluminum oxide layer 10 is introduced between the particles. Thus, each surface of the Al particles 8 (metal particles) is covered by aluminum oxide (dielectric) entirely.

Furthermore, BaTiO₃ particles (dielectric particles 38) are present between at least some of the Al particles 8 (conductive particles).

When dielectric particles are thus present between the conductor particles, the insulator breakdown voltage of the structural body 12 increases. This is apparently because the gap between the conductor particles increases. However, where the diameter of dielectric particles becomes too large, the capacitance between the conductor particles decreases. As a result, capacitance of the capacitor also decreases. Therefore, it is preferred that a mean size of dielectric particles be less than a mean size of conductor particles 8.

In the example depicted in FIG. 8, BaTiO₃ particles are used as the dielectric particles 38. When dielectric particles having a high dielectric constant, such as BaTiO₃ particles, are mixed with a starting material powder, capacitance of the capacitor rises rapidly.

The added particles as the dielectric particles used for this present embodiment are not only BaTiO₃ particles but also the other dilectic material particles.

Ceramics such as TiO₂, MgO, Ta₂O₃, SiO₂, AlN, and Al₂O₃ are other examples of dielectrics that can thus increase the capacitor capacitance.

Other examples include oxide ceramics having a perovskite structure, for example, lead-containing composite perovskite oxides such as PbTiO₃, PbZrO₃, PZT represented by a general formula Pb(Zr₁₋ₓTiₓ)O₃ (0 ≤ x ≤ 1), PLZT represented by a general formula (Pb_{1-y}La_{y}) (Zr₁₋ₓTiₓ)O₃ (0 ≤ x, y ≤ 1), Pb(Mg_{1/3}Nb_{2/3})O₃, and Pb(Ni_{1/3}Nb_{2/3})O₃, Pb(Zn_{1/3}Nb_{2/3})O₃ of a Pb system, BaTiO₃, BaTi₄O₉, Ba₂Ti₉O₂₀, Ba (Zn_{1/3}Ta_{2/3})O₃, Ba (Zn_{1/3}Nb_{2/3}) O₃, Ba (Mg_{1/3}Ta_{2/3}) O₃, Ba (Co_{1/3}Ta_{2/3}) O₃, Ba (CO_{1/3}Nb_{2/3}) O₃, Ba(Ni_{1/3}Ta_{2/3})O₃, Ba(Zr₁₋ₓTiₓ)O₃, (Ba₁₋ₓSrₓ)TiO₃, and BaTi₁₋ₓZrₓO₃ of a Ba system, and also bismuth layered structures, ZrSnTiO₄, CaTiO₃, MgTiO₃, SrTiO₃, and CaCu₃Ti₄O₁₂.

In addition, any oxide, nitride, and carbide particles having a dielectric constant equal to or higher than 10 can be used.

The capacitance density of a capacitor using the structural body explained with reference to FIG. 1 (deposited film formed by gas deposition from Al particles, surfaces of which are covered with aluminum oxide) as a dielectric layer is 30 µF/cm², but the capacitance density of a capacitor using the structural body depicted in FIG. 8 as a dielectric layer (thickness 10 µm) is 100 µF/cm².

Ceramics such as TiO₂, MgO, Ta₂O₃, SiO₂, AlN, and Al₂O₃ are other examples of dielectrics that can thus increase the capacitor capacitance.

Other examples include oxide ceramics having a perovskite structure, for example, lead-containing composite perovskite oxides such as PbTiO₃, PbZrO₃, PZT represented by a general formula Pb (Zr₁₋ₓTiₓ)O₃ (0 ≤ x ≤ 1), PLZT represented by a general formula (Pb_{1-y}La_{y}) (Zr₁₋ₓTiₓ)O₃ (0 ≤ x, y ≤ 1), Pb (Mg_{1/3}Nb_{2/3}) O₃, and Pb(Ni_{1/3}Nb_{2/3})O₃, Pb(Zn_{1/3}Nb_{2/3})O₃ of a Pb system, BaTiO₃, BaTi₄O₉, Ba₂Ti₉O₂₀, Ba (Zn_{1/3}Ta_{2/3}) O₃, Ba (Zn_{1/3}Nb_{2/3}) O₃, Ba (Mg_{1/3}Ta_{2/3}) O₃, Ba (Co_{1/3}Ta_{2/3}) O₃, Ba(Co_{1/3}Nb_{2/3})O₃, Ba(Ni_{1/3}Ta_{2/3})O₃, Ba(Zr₁₋ₓTiₓ)O₃, (Ba₁₋ₓSrₓ)TiO₃, and BaTi₁₋ₓZrₓO₃ of a Ba system, and also bismuth layered structures, ZrSnTiO₄, CaTiO₃, MgTiO₃, SrTiO₃, and CaCu₃Ti₄O₁₂.

In addition, any oxide, nitride, and carbide particles having a dielectric constant equal to or higher than 10 can be used.

Thus, as mentioned hereinabove, a lead-containing dielectric also can be used in accordance with the embodiments, but by contrast with a BL capacitor, no lead vapor is generated in the manufacturing process.

In the example explained with reference to FIG. 8, BaTiO₃ particles are present in a spot-like fashion (at discrete points) in the aluminum oxide layer, but observations conducted by the inventors under a transmission electron microscope confirmed that there can be a case in which the BaTiO₃ layer is formed continuously.

### Example 1

The present example relates to a method for manufacturing a capacitor (and the capacitor) in which aluminum particles, the surfaces of which are covered entirely with aluminum oxide, are ejected together with a gas and fixed to an aluminum foil.

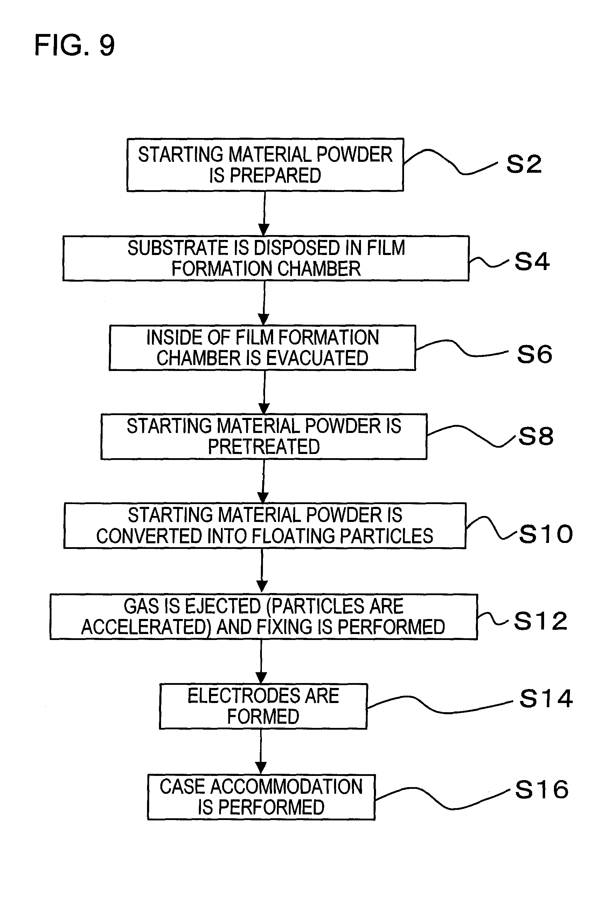

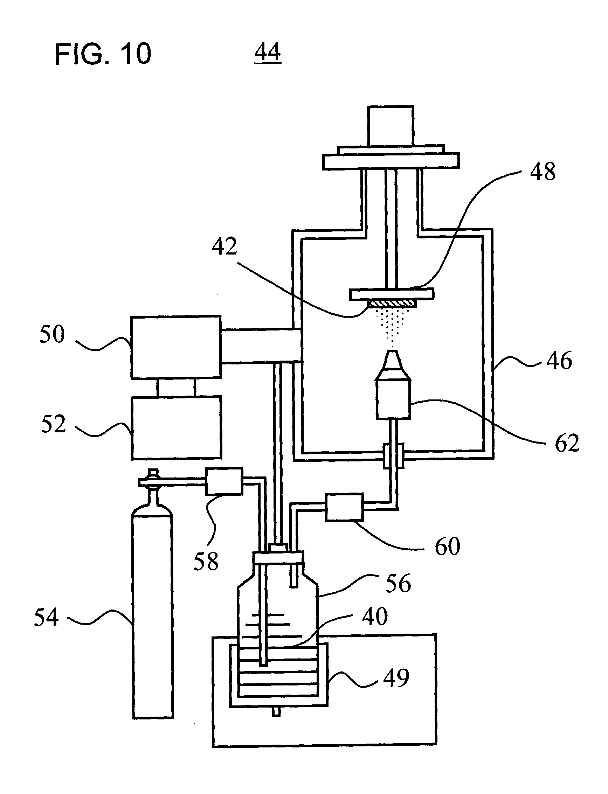

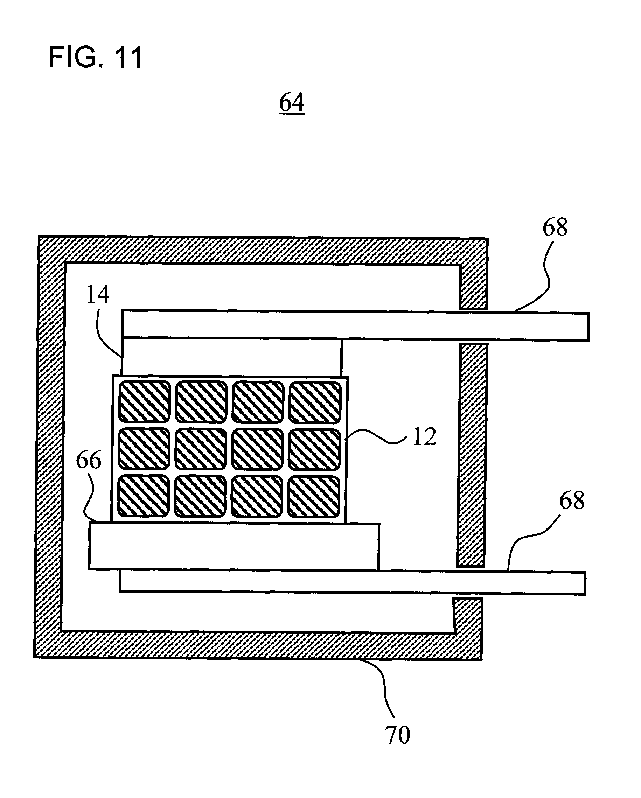

FIG. 9 is a flowchart illustrating the procedure of the manufacturing method according to the present example. FIG. 10 is a structural diagram of a film formation apparatus used in the present example. FIG. 11 is a cross-sectional view of a capacitor according to the present example.

### (1) Manufacturing Method and Configuration

A configuration of the capacitor according to the present example will be explained below following the manufacturing procedure.

### (i) Step S2

In this step, a starting material powder 40 is prepared (see FIG. 9 and FIG. 10).

First, an aggregate of fine particles of aluminum (that is, an Al powder) with a mean particle size of 3 µm and a standard deviation of ± 1 µm is prepared. Here, the mean particle size and the standard deviation thereof are the values measured by a centrifugal separation and precipitation method by using a centrifugal particle size analyzer SA-CP3 manufactured by Shimazu Corp. (the mean particle size and the standard deviation for the particles used in the below-described examples are measured as well).

The Al powder is then heated for 3 h at 550°C in the air. As a result of this oxidation treatment, the aluminum powder particles each become covered with aluminum oxide with a thickness of about 100 nm, and a starting material powder (referred to hereinbelow as Al₂O₃-covered Al powder) is formed. In this case, the aluminum oxide can have a purely amorphous structure, a mixed amorphous-crystalline structure, or a purely crystalline structure.

### (ii) Step S4 to step S12

An aluminum foil is then mounted as a substrate 42 for film formation on the film formation apparatus 44. A film formation chamber 46 has a stage 48 that can be moved in the X direction and Y direction, and the aluminum foil with a thickness of 50 µm is mounted thereon (step S4).

The inside of the film formation chamber 46 is then evacuated by a mechanical booster pump 50 and a vacuum pump 52 and the pressure is reduced to 10 Pa or below (step S6). In this case, a first valve 58 provided in a gas pipe connecting a gas cylinder 54 with a floating particle formation container 56 is closed. A second valve 60 provided in a gas pipe connecting the floating particle formation container 56 with the film formation chamber 46 is also closed.

The starting material powder prepared in step S2 is then introduced into the floating particle formation container 56. Ultrasound waves are then applied to the entire floating particle formation container 56 with an oscillator 49, and in this state the starting material powder 40 is heated to about 80°C and degassed for 30 min in vacuum. At this time, the second valve 60 is opened, and the floating particle formation container 56 is evacuated. The second valve 60 is closed upon completion of vacuum degassing. The above-described pretreatment removes moisture adsorbed on the surface of starting material powder 40 (step S8).

The first valve 58 is then opened, a compressed gas composed of high-purity helium gas (gas pressure 2 kg/cm², gas flow rate 8 1/min) is introduced into the floating particle formation container 56, the Al₂O₃-covered Al fine particles constituting the starting material powder 40 rise and start floating in the helium gas (fine particles thus floating in the gas are called floating particles). In this process, ultrasonic waves are still applied by the oscillator 49 to the entire floating particle formation container 56 to enhance the formation of floating particles. The gas flow rate is measured with a mass flowmeter (not depicted in the figure) provided between the gas cylinder 54 and the floating particle formation container 56 (step S10).

The second valve 60 is then opened and the starting material powder that has been converted into floating particles is conveyed into the film formation chamber 46 via a nozzle 62, and the Al₂O₃-covered Al fine particles converted into floating particle are ejected from the nozzle 62 toward a substrate 42 (step S12). The ejection time (film formation time) is 38 min. In the course of film formation, the substrate is maintained at room temperature. A deposited film with a thickness of 250 µm is formed by the above-described procedure.

The above-described FIG. 1 illustrates specific features of a cross-sectional image of the deposited film formed by the above-described procedure, the image was observed under a transmission electron microscope. FIG. 1 demonstrates that the deposited film is a structural body formed by the process in which Al particles 8 (conductor particles) covered in aluminum oxide 10 (dielectric) entirely collide with a substrate and are fixed to the substrate in a state in which the surface of the particles is still covered entirely with aluminum oxide 10.

The adhering strength between the deposited film (structural body) and the substrate is 3 kg/mm².

### (iii) Step S14

The substrate on which the above-described structural body (deposited film) has been formed is then removed from the film formation chamber 46, and an upper electrode of a capacitor is formed on the upper surface of the structural body. The structure after the metal electrode has been formed on the upper surface is identical to the principal parts of the capacitor 11 explained hereinabove in Embodiment 1 with reference to FIG. 4.

The upper electrode 14 is formed following the below-described procedure (see FIG. 4).

First, a Au film serving as a seed electrode is deposited by a evaporation method on the upper surface of the structural body 12. Then, a photoresist film having an opening in a predetermined position in which the upper electrode will be formed is formed on the seed electrode.

An Au plated layer is then formed by electroplating in the opening. The photoresist is then removed and the exposed Au film (evaporated film) is removed by milling or chemical etching.

The upper electrode 14 is formed by the above-described process.

### (iv) Step 16

FIG. 11 is a cross-sectional view of a capacitor 64 completed in the present step.

In the present step, first, electrodes lead 68 are connected to an aluminum foil 66 that will serve as a lower electrode and the upper electrode 14. Then, a capacitor main body provided with the electrodes lead 68 is accommodated in an electrically insulating case 70 (for example, a ceramic package) so that an end of the electrode leads 68 are exposed to the outside. The capacitor 64 is completed by the above-described procedure.

### (2) Properties

Properties of the capacitor according to the present example will be described below.

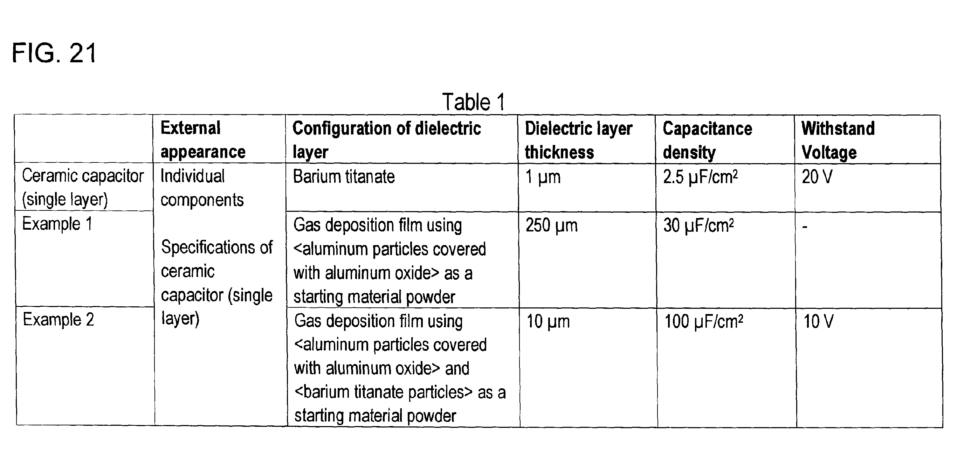

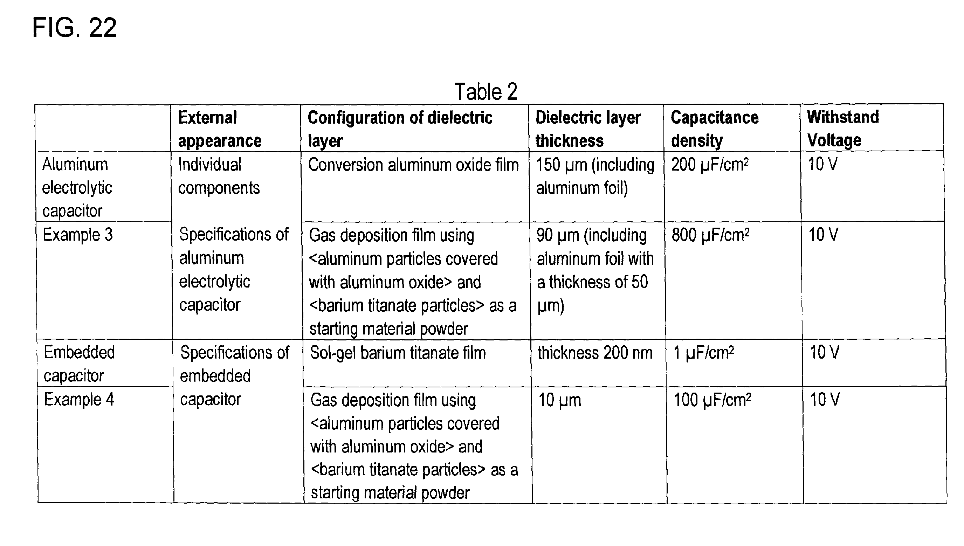

Figs.21 and 22 indicate Table 1 and Table 2. Table 1 and Table 2 illustrate data (configuration of the dielectric layer and properties of the produced capacitor) relating to the present example and the below-described Example 2 to Example 4. Data relating to the conventional capacitor that has a configuration similar to that of the capacitors of the aforementioned examples are also included in Table 1 and Table 2.

For example, the configuration of the capacitor 64 according to the present example is similar to that of the conventional ceramic capacitor with a single dielectric layer.

The second row in Table 1 describes data relating to a ceramic capacitor in which a dielectric layer is a single layer of barium titanate that has a thickness of 1 µm. The third row in Table 1 describes data relating to the capacitor according to the present example.

As described in the second and third rows of Table 1, the capacitance density of the ceramic capacitor is 2.5 µF/cm², whereas the capacitance density of the capacitor according to the present example is substantially higher and equal to 30 µF/cm².

Thus, when a dielectric layer is formed by a gas deposition method by using a powder in which each surface of conductor particles is covered with a dielectric entirely as a starting material powder, it is possible to form a capacitor with capacitance higher than that of ceramic capacitors.

### Example 2

The present example relates to a method for manufacturing a capacitor (and the capacitor itself) by which aluminum particles coated with aluminum oxide are ejected together with barium titanate particles and fixed to an aluminum foil.

### (1) Manufacturing Method

The method for manufacturing a capacitor according to the present example is different from the method for manufacturing a capacitor of Example 1 in that the starting material powder is a mixed powder of aluminum particles each covered in dielectric and barium titanate particles. The size of the barium titanate particles is 100 nm. The mixing ratio of the barium titanate particles is 5 vol%.

Another difference between the manufacturing method of the present example and the manufacturing method of Example 1 is that the ejection time of the powder converted into floating particle is 1.5 min. As a result, the thickness of the deposited layer formed in the present example is 10 µm. The adhering strength between the deposited film and the substrate is 3 kg/mm².

Yet another difference between the manufacturing method of the present example and the manufacturing method of Example 1 is that in the electrode formation process (step S14), the deposited film formed by the gas deposition method is peeled off the substrate and the electrodes are formed after the upper surface and lower surface of the deposited film have been polished by 500 nm. Here, both the upper-surface electrode and the lower-surface electrode are formed in the same manner as the upper-surface electrode of Example 1.

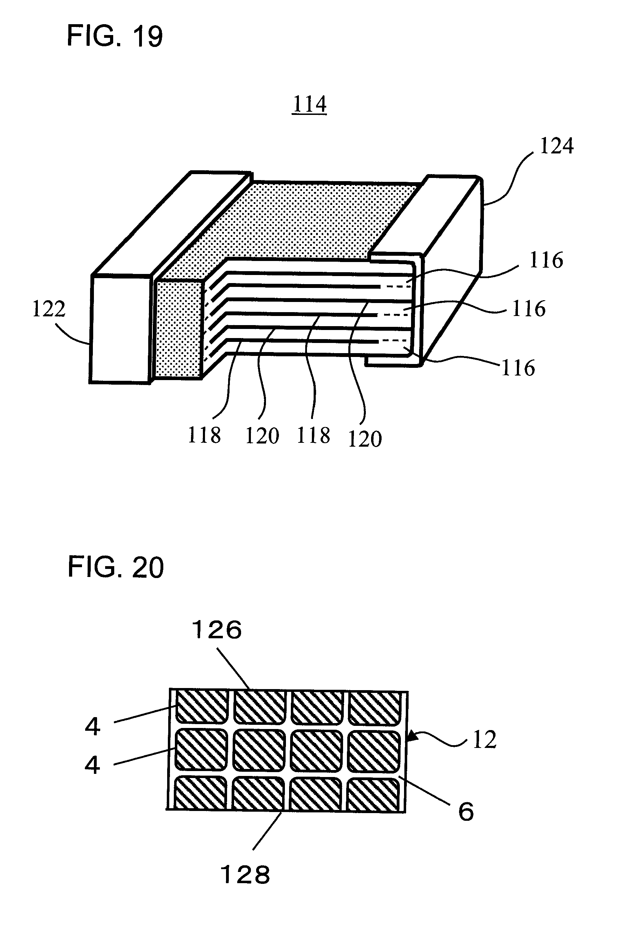

FIG. 20 is a schematic diagram illustrating a cross section of a deposited film (structural body) obtained by peeling the deposited film formed by the gas deposition method from the substrate and polishing the upper surface and lower surface of the deposited film.

As depicted in FIG. 20, when an upper surface 126 and a lower surface 128 of the deposited film (structural body 12) are polished, the oxide film covering the outermost surface of the deposited film is removed. Therefore, capacitance of the capacitor is increased.

Polishing of the deposited film (structural body) may be performed by mechanical polishing, electrolytic polishing, CMP (chemical mechanical polishing), or ion milling. With the exception of the above-described respects, the method for manufacturing a capacitor of the present example is substantially identical to the method for manufacturing a capacitor of Example 1.

### (2) Configuration

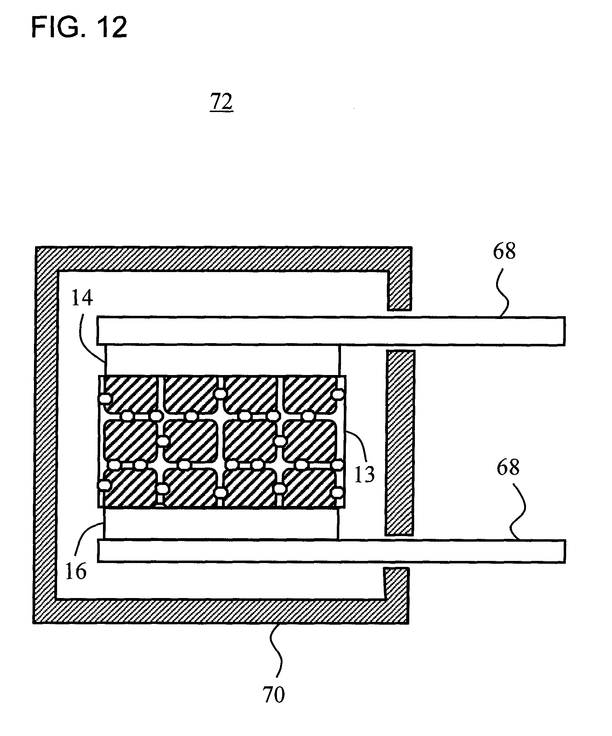

FIG. 12 is a schematic cross-sectional view of the capacitor according to the present example.

A capacitor 72 according to the present example differs from the capacitor of Example 1 in that barium titanate particles are present between the conductor particles forming the structural body 13.

Furthermore, the difference from the capacitor of Example 1 is also in that the upper surface and lower surface of the structural body 13 are polished to remove the oxide film.

The capacitor 72 according to the present example also differs from the capacitor 11 of Example 1 in that aluminum used as a substrate is peeled off and the lower electrode 16 is formed by gold plating.

In other respects, the capacitor of the present example is substantially identical to the capacitor of Example 1.

### (3) Properties

The fourth row of Table 1 describes data relating to the capacitor of the present example.

As depicted in Table 1, the capacitance density of the capacitor according to the present example is 100 µF/cm² and is even larger than that of the capacitor of Example 1.

It is not clear exactly why the capacitance density is increased by mixing barium titanate particles with the starting material powder, but this result apparently arises from a high specific dielectric constant of barium titanate that is equal to 3000.

The withstand voltage of the capacitor according to the example is 10 V, this value making the capacitor suitable for practical use.

### Example 3

The present example relates to a capacitor of electrolytic capacitor specifications in which a dielectric layer is formed according to Example 2 on an aluminum foil and the aluminum foil is wound as in the production of an aluminum electrolytic capacitor.

### (1) Manufacturing Method

The capacitor according to the present example is manufactured in accordance with the manufacturing method of Example 2. Thus, the method for manufacturing a capacitor of the present example is substantially identical to the method for manufacturing a capacitor of Example 2.

However, an aluminum foil used as a substrate has a length sufficient for the substrate to be wound. The dielectric layer (deposited layer) is not peeled off the aluminum foil, and the aluminum foil serves as one electrode of the capacitor.

Furthermore, in the present example, a dielectric layer is formed on both surfaces of the aluminum foil. In the present example, the deposition time of the dielectric layer is 3 min for each surface and the thickness of each dielectric layer is 20 µm (twice that of Example 2). The aluminum foil thickness is 50 µm and identical to that of Example 2. The adhering strength between the dielectric layer and the substrate is 3 kg/mm².

As described in the section "(2) Configuration" below, an electrode formation process (step S14) and a case accommodation process (S16) are different from those of the manufacturing method of Example 2.

Furthermore, in order to increase withstand voltage of the capacitor, an oxidation film may be formed to have a layered structure by subjecting part of the deposited film to a conversion treatment. For example, when a dielectric layer with a thickness of 50 µm is formed, a process of forming a deposited film with a thickness of 5 µm by gas deposition and a process of oxidizing the deposited film surface by applying a DC voltage of 15 V in an aqueous solution of ammonium adipate (conversion treatment) may be repeated. By thus forming an oxidation film having a layered structure in the deposited film, it is possible to increase the withstand voltage of the capacitor. With the exception of the above-described respects, the method for manufacturing a capacitor of the present example is substantially identical to the method for manufacturing a capacitor of Example 2.

### (2) Configuration

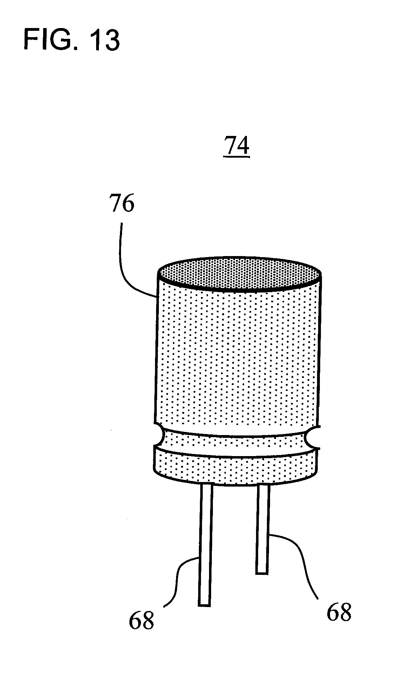

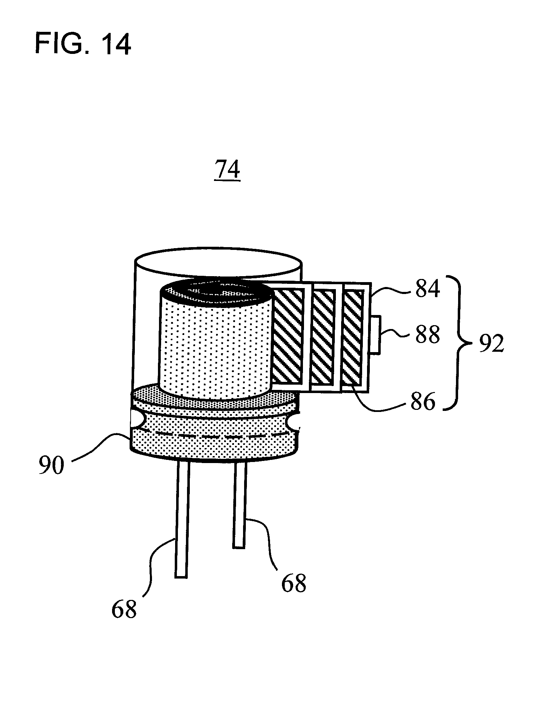

FIG. 13 is a perspective view illustrating an external appearance of a capacitor 74 according to the present example. FIG. 14 is a view obtained by observing the inside of the capacitor 74 according to the present example through an outer case (metallic case 76). FIG. 13 and FIG. 14 indicate that the capacitor 74 according to the present example is similar to a wound electrolytic capacitor.

In the capacitor according to the present example, an aluminum foil having dielectric layers (structural bodies) formed on both surfaces thereof by gas deposition is used instead on an anode foil of an electrolytic capacitor. In the present example, a structure obtained by further forming electrodes on the dielectric layers (structural body) is the main portion (dielectric layers and electrodes) of the capacitor.

The configuration of the present example will be explained below following the electrode formation process (S14) and the case accommodation process (S16).

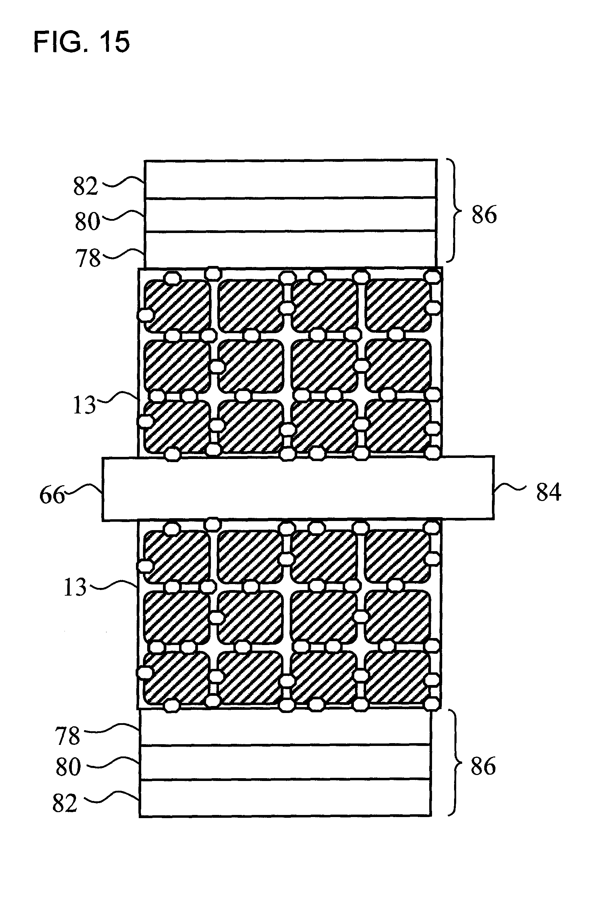

FIG. 15 illustrates a transverse sectional view of the main portion (dielectric layers and electrodes) of the capacitor according to the present example.

First, a paste-like electrically conductive polymer 78 is coated on the surface of structural bodies 13 (dielectric layers) formed on both surfaces of the aluminum foil 66 according to the above-described "(1) Manufacturing Method". A paste-like carbon 80 is then coated on the polymer and then a silver paste 82 is coated again.

This procedure (electrode formation process (S14)) forms a second electrode 86 configured by the electrically conductive polymer 78, carbon 80, and silver paste 82.

Electrode leads 68 are then connected to a first electrode 84 made from an aluminum foil and the second electrode 86 (see FIG. 14). The aluminum foil 86 is then wound and the end portion thereof is fixed with a fixing tape 88 so that the wound state is maintained.

The electrode leads 68 are then fixed to a sealing body (insulating resin) 90.

Finally, the wound aluminum foil 92 is accommodated inside a metal case 76, and the production of the capacitor according to the present example is completed (case accommodation process (S16)).

### (3) Properties

The third row in Table 2 describes data on the capacitor according to the present example.

As depicted in Table 2, the capacitance density of the capacitor according to the present example is 800 µF/cm² and substantially larger than the capacitance density 200 µF/cm² of the aluminum electrolytic capacitor described in the second row. The withstand voltage is 10 V and identical to that of the aluminum electrolytic capacitor.

Thus, the capacitor according to the present example has a capacitance density exceeding that of the aluminum electrolytic capacitor. Furthermore, by contrast with the aluminum electrolytic capacitor, a process for manufacturing the capacitor according to the present example generates no toxic waste water. Thus, the capacitor according to the present example is a high-capacitance capacitor with a small environmental load. Furthermore, the capacitor according to the present example has no polarity. As a result, no attention may be paid to polarity of electrodes when the capacitor according to the present example is attached to a printed circuit board.

### Example 4

The present example relates to a capacitor formed on a printed circuit board.

### (1) Manufacturing Method and Configuration

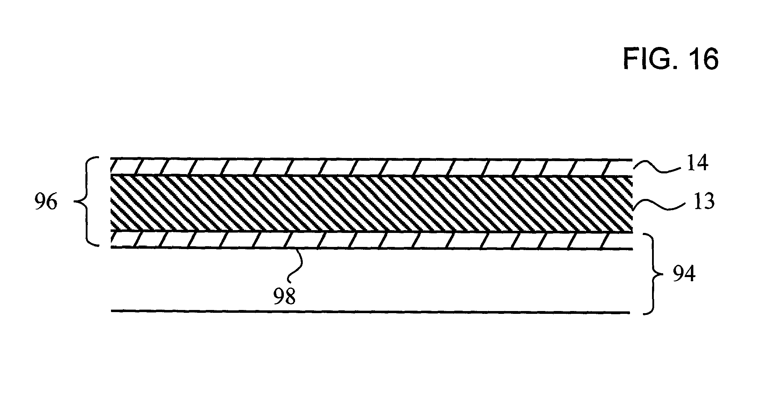

FIG. 16 is a cross-sectional view of a capacitor of the present example.

Initially, a structural body 13 (deposited film) serving as a dielectric layer of a capacitor is formed by a gas deposition method on a printed circuit board 94 (FR4) as a substrate.

The procedure for forming the structural body 13 is identical to the manufacturing method of Example 2, except that the substrate is a printed circuit board rather than the aluminum foil.

The upper surface of the structural body 13 is then polished, an oxidation film is removed, and a gold upper electrode 14 is thereafter formed by plating in accordance with Example 2.

By the above-described procedure, a capacitor 96 is formed on the printed circuit board (see FIG. 16). In this case, the lower electrode of the capacitor 96 is formed by a copper foil 98 of the printed circuit board 94.

The capacitor according to the present example has a basic structure of an embedded capacitor.

Multilayer configuration can be also formed as the embedded capacitor.

A printed circuit board with a capacitor embedded therein can be formed, for example, by repeating the steps of laminating an epoxy resin film (referred to hereinbelow as "film") on the capacitor according to the present example, thermally curing the film, forming a wiring on the thermally cured film, and arranging electronic components.

### (2) Properties

The fifth row in Table 2 describes data on the capacitor according to the present example.

As depicted in Table 2, the capacitance density of the capacitor according to the present example is 100 µF/cm².

A conventional embedded capacitor is, for example, a capacitor in which a barium titanate layer formed by a solgel method is used as a dielectric layer. The seventh row in Table 1 describes data on such an embedded capacitor.

As depicted in the seventh row in Table 1, the capacitance density of the conventional embedded capacitor is not more than 1 µF/cm². The capacitance density (100 µF/cm²) of the capacitor of the present example is substantially higher than this value. The withstand voltage of the capacitor of the present example is 10 V and identical to that of the conventional embedded capacitor.

Thus, according to this example, the capacity of an embedded capacitor can be greatly increased.

An embedding method can be also used by which a film is formed in a resin substrate in a process of forming a multilayer structure, and the capacitor in accordance with the embodiments can be manufactured as a separate component and then embedded in the resin substrate.

### Example 5

This example relates to an electronic device carrying a capacitor according to any of the above-described examples.

Because a structural body serving as a dielectric layer in the capacitors of the above-described examples is thinner than 400 µm, the capacitor is suitable for miniaturization. Therefore, the capacitors of the above-described examples are advantageous as capacitors to be carried on miniaturized electronic devices.

For example, these capacitors can be used for decoupling capacitors, coupling capacitors, capacitors for filters, and smoothing capacitors in various electronic devices such as personal computers, servers, game devices, and information home devices, miniaturized wireless devices (for example, cellular phones), IC (integrated circuit) cards, and the like.

A structural body forming a capacitor to be carried on a small-size electronic device preferably has a thickness of less than 400 µm, more preferably equal to or less than 200 µm, and most preferably equal to or less than 100 µm.

Meanwhile, a powder of aggregated fine particles with a mean particle size equal to or more than 50 nm is usually used as a starting material powder for gas deposition. Therefore, the thickness of the structural body serving as a dielectric layer is preferably equal to or more than 1 µm, more preferably equal to or more than 5 µm, and most preferably equal to or more than 10 µm.

In the present example, an electronic device carrying the capacitor of Example 4 will be explained as an example of a small-size electronic device according to the present example.

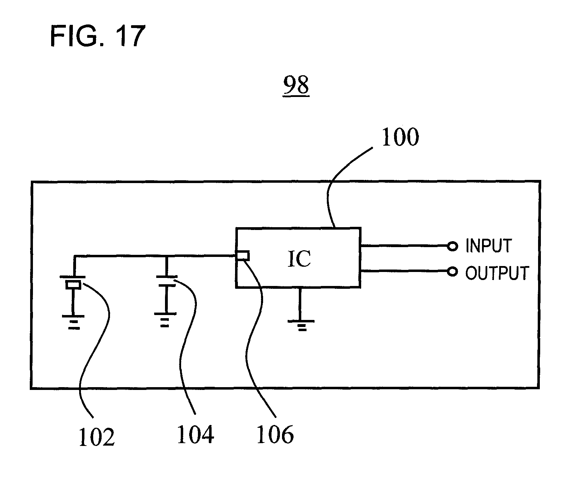

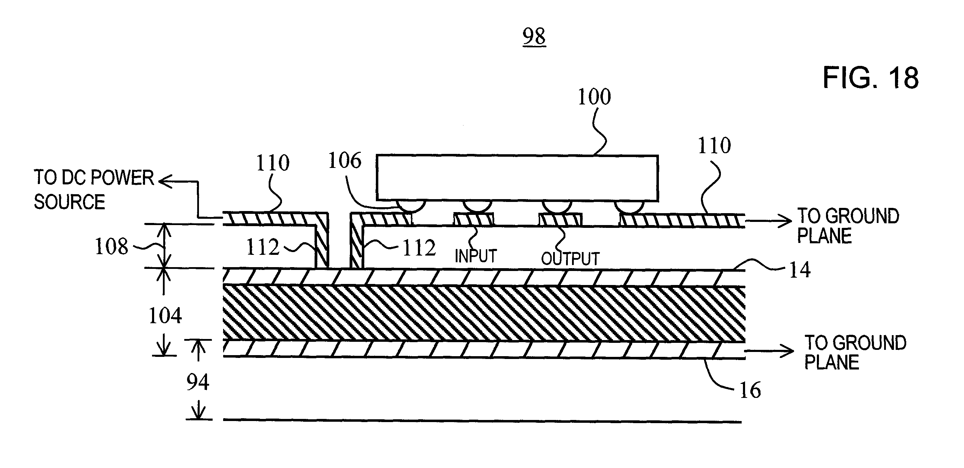

FIG. 17 is a block diagram of the electronic device according to the present example. FIG. 18 is a schematic cross-sectional view of the electronic device according to the present example.

As depicted in FIG. 17 and FIG. 18, the electronic device according to the present example has at least an IC 100, a DC power source 102 for driving the IC 100, and a decoupling capacitor 104 for inhibiting the noise generated by the electronic device 98. The DC power source 102 is connected to a power source terminal 106 of the IC 100. In this case, a decoupling capacitor 104 is the capacitor according to Example 4, and an upper electrode 14 thereof is connected to the power source terminal 106 of the IC 100. Meanwhile, the lower electrode 16 of the decoupling capacitor 104 is connected to a ground plane.

An epoxy resin film 108 is laminated on the decoupling capacitor 104 and thermally cured. A copper wiring 110 is formed on the resin film. The copper wiring 110 connects the DC power source 102 and the upper electrode 14 of the decoupling capacitor 104 to the power source terminal 106 of the IC 100. The upper electrode 14 of the decoupling capacitor 104 and the power source terminal 106 of the IC 100 are connected via a copper wiring located in a via hole 112 formed in the epoxy resin film 108.

Thus, in the electronic device according to the present example, the capacitor 104 according to Example 4 is embedded as a decoupling capacitor in a build-up wiring board formed by the printed circuit board (FR 4) 94 and the epoxy resin film 108.

As described hereinabove, the capacitance of the capacitor according to Example 4 is substantially larger than that of the conventional embedded capacitor. Therefore, the capacitance of the decoupling capacitor 104 according to the present example is substantially higher than that of the conventional embedded decoupling capacitor.

As a result, even when the electric current supplied to the power source terminal 106 of the IC 100 fluctuates significantly, the electric current fluctuations are absorbed by the decoupling capacitor 104 and the electronic device according to the present examples generates practically no noise.

### Modification Example 1

The present modification example relates to a capacitor in which a dielectric layer is formed by the structural body according to Example 1 or 2, the configuration of this capacitor being similar to that of a multilayer ceramic capacitor.

The capacitor according to Examples 1 and 2 is similar to a ceramic capacitor in which the dielectric layer has a monolayer configuration.

However, the deposited film according to Example 1 and 2 is not required to be used only for a dielectric layer of a monolayer ceramic capacitor and may be used for a dielectric layer of a multilayer ceramic capacitor.

FIG. 19 is a perspective view illustrating the configuration of a capacitor 114 according to the present modification example which has a configuration similar to that of a multilayer ceramic capacitor and has dielectric layers formed according to Example 1 or 2. Part of the capacitor 114 depicted in FIG. 19 is cut out to illustrate the internal structure of the capacitor 114 according to the present modification example.

As depicted in FIG. 19, in the capacitor 114 according to the present modification example, structural bodies 116 according to Example 1 or 2 and internal electrodes 118, 120 are laminated alternately. In this case, the internal electrodes 118, 120 are classified into first internal electrodes 118 disposed in odd layers, counted from the bottom, and second internal electrodes 120 disposed in even layers, counted from the bottom. The first internal electrodes 118 and second internal electrodes 120 are disposed as teeth of a comb and connected to first external electrodes 122 and second external electrodes 124.

Therefore, a large number of capacitors are connected in parallel between the first and second external electrodes 122 and 124, and the capacitance of the capacitor 114 is increased.

The laminated structure of the structural body 116 and internal electrodes 118 and 120 is formed, for example, by repeating the steps of depositing the structural body 116 by gas deposition on an aluminum foil and evaporating and lifting off the metal film. In this case, the structural body 116 is formed by gas deposition according to Example 1 or 2, and the aluminum foil is peeled off after the structural body 116 and internal electrodes 118 and 120 have been formed.

The metal layer can be also formed by using evaporation, sputtering, a thick-film silver paint, and carbon.

The peeling-off process can also be conducted, after the multilayer structure consisting of dielectric layers and metal internal electrode layers is formed.

Also, after the multilayer structure is completed on the substrate or foil, the substrate or foil cannot be peeled off in some application cases.

### Modification Example 2

In the above-described examples, aluminum particles are used as electrically conductive particles. However, other metals, electrically conductive ceramics (electrically conductive oxides such as ruthenium oxide and indium oxide), and electrically conductive resins may be also used as the conductive particles. Examples of other metals include such generally employed metals as noble metals such as gold, silver, copper, and platinum and valve metals such as titanium, tantalum, zirconium, magnesium, silicon, and iron. The preferred for use are metal materials that can be easily plastically deformed, and the metal particles of the starting material are themselves in a state in which they can be sufficiently plastically deformed during film formation and processing (although aluminum is a material that can be easily plastically deformed, a powder obtained by processing aluminum subjected to rolling or the like into powder cannot be plastically deformed during film formation and a molded body cannot be formed. For example, the metal particles are desirably atomized particles that have high deformation ability and small strains).

In addition to aluminum oxide, a variety of dielectrics such as tantalum oxide, titanium oxide, zirconium oxide, hafnium oxide, silicon dioxide, silicon nitride, aluminum nitride, tantalum nitride, and magnesium oxide, may be used as the dielectric that covers the conductor particles. The same is true for dielectric particles serving as a starting material power than is mixed with the conductor particles covered with the dielectric.

In the case of a valve metal such as titanium, tantalum, zirconium, magnesium, silicon, and iron, an oxide film can be easily formed by performing thermal oxidation.

Other examples include oxide ceramics having a perovskite structure, for example, lead-containing composite perovskite oxides such as PbTiO₃, PbZrO₃, PZT represented by a general formula Pb(Zr₁₋ₓTiₓ)O₃ (0 ≤ x ≤ 1), PLZT represented by a general formula (Pb_{1-y}La_{y}) (Zr₁₋ₓTiₓ)O₃ (0 ≤ x, y ≤ 1), Pb (Mg_{1/3}Nb_{2/3})O₃, and Pb (Ni_{1/3}Nb_{2/3})O₃, Pb (Zn_{1/3}Nb_{2/3})O₃ of a Pb system, BaTiO₃, BaTi₄O₉, Ba₂Ti₉O₂₀, Ba (Zn_{1/3}Ta_{2/3})O₃, Ba (Zn_{1/3}Nb_{2/3}) O₃, Ba (Mg_{1/3}Ta_{2/3}) O₃, Ba (Co_{1/3}Ta_{2/3}) O₃, Ba(Co_{1/3}Nb_{2/3})O₃, Ba(Ni_{1/3}Ta_{2/3})O₃, Ba (Zr₁₋ₓTiₓ)O₃, (Ba₁₋ₓSrₓ)TiO₃, and BaTi₁₋ₓZrₓO₃ of a Ba system, and also bismuth layered structures, ZrSnTiO₄, CaTiO₃, MgTiO₃, SrTiO₃, and CaCu₃Ti₄O₁₂.

In addition, any oxide, nitride, and carbide particles having a dielectric constant equal to or higher than 10 can be used.

### Modification Example 3

In above examples, a structural body formed by gas deposition using conductor particles covered with a dielectric as a starting material powder is employed as a dielectric layer of a capacitor.

However, the application range of the above-described structural body is not limited to capacitors. For example, the structural body can be also applied to a wide range of devices formed from a composite material of a conductor and a dielectric, such as nanocomposite magnets, magnetic refrigerating elements, wear-resistant surface coatings, pressure-sensitive sensors, ultrasonic sensors, IR (infrared) sensors, temperature sensors, varistors, various piezoelectric elements, optical modulators, and thermoelectric elements.

With the capacitor and method for manufacturing the capacitor of the embodiments, a high-capacity and small-size capacitor can be manufactured in an easy manner and at a low cost.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the scope of the claims.

## Claims

1. A method for manufacturing a deposited film, comprising:
accelerating conductor particles by ejecting the conductor particles together with gas, wherein the entire surface of each of the conductor particles is covered with a dielectric film;
fixing the conductor particles to a substrate by colliding the conductor particles with the substrate to form said deposited film, **characterised in that** the conductor particles are plastically deformed during collision with the substrate to such a degree that the dielectric film formed on the surface of the conductor particles is not fractured such that the entire surface of the conductor particles remains covered with the dielectric film.

2. The method for manufacturing a deposited film according to claim 1, wherein the ejecting the conductor particles includes ejecting dielectric particles together with the conductor particles which are covered with the dielectric film, and the colliding the conductor particles includes colliding the dielectric particles and the conductor particles which are covered with the dielectric film with the substrate.

3. A method of manufacturing a capacitor, the method comprising:
manufacturing a deposited film according to the method of claim 1, and
sandwiching the deposited film formed of the conductor particles fixed to the substrate between electrodes.

4. A deposited film formed from conductor particles, the entire surface of each of the conductor particles being covered with a dielectric film, which conductor particles have been collided with a substrate so as to fix the conductor particles to the substrate, **characterised in that** the conductive particles of the deposited film are plastically deformed and **in that** the dielectric film formed on the surface of the conductor particles is not fractured such that the entire surface of the conductor particles remains covered with the dielectric film.

5. The deposited film according to claim 4, wherein dielectric particles are provided between the conductor particles.

6. The deposited film according to claim 5, wherein a mean particle size of the dielectric particles is less than a mean particle size of the conductor particles.

7. A capacitor in which the deposited film according to claim 4, 5 or 6 is sandwiched between electrodes.

8. The capacitor according to claim 7, wherein a thickness of the deposited film is less than 400 µm.

9. An electronic device carrying the capacitor according to claim 7.

10. A method for manufacturing a composite material of a conductor and a dielectric, comprising:
compressing conductor particles, the entire surface of each of the conductor particles being covered with a dielectric film, in order to fix the conductor particles to each other, **characterised in that** the conductor particles are plastically deformed to such a degree that the dielectric film formed on the surface of the conductor particles is not fractured such that the entire surface of the conductor particles remains covered with the dielectric film.

11. The method according to claim 10 wherein the composite material is for forming a capacitor, the method further comprising:
sandwiching a structural body formed of the composite material fixed to a substrate between electrodes.

12. A composite material formed from conductor particles, the entire surface of the conductor particles being covered with a dielectric film, which conductor particles have been compressed in order to fix the conductor particles to each other, **characterised in that** the conductor particles of the composite material are plastically deformed to such a degree that the dielectric film formed on the surface of the conductor particles is not fractured such that the entire surface of the conductor particles remains covered with the dielectric film.

13. A capacitor in which the composite material according to claim 12 is fixed to a substrate and sandwiched between electrodes.

## Patentansprüche

1. Verfahren zum Herstellen eines abgeschiedenen Films, mit:
dem Beschleunigen von Leiterpartikeln durch Ausstoßen der Leiterpartikel zusammen mit einem Gas, wodurch die gesamte Oberfläche von jedem der Leiterpartikel mit einem dielektrischen Film bedeckt wird,
dem Befestigen der Leiterpartikel an einem Substrat, indem die Leiterpartikel auf das Substrat auftreffen, um den abgeschiedenen Film zu bilden, **dadurch gekennzeichnet, dass** die Leiterpartikel während des Auftreffens auf das Substrat plastisch zu einem solchen Grad verformt werden, dass der dielektrische Film, der auf der Oberfläche der Leiterpartikel gebildet ist, nicht zerbrochen wird, so dass die gesamte Oberfläche der Leiterpartikel mit dem dielektrischen Film bedeckt bleibt.

2. Verfahren zum Herstellen eines abgeschiedenen Films nach Anspruch 1, bei dem das Ausstoßen der Leiterpartikel das Ausstoßen von dielektrischen Partikeln zusammen mit den Leiterpartikeln, die mit einem dielektrischen Film bedeckt sind, aufweist, und das Auftreffen der Leiterpartikel das Auftreffen der dielektrischen Partikel und der Leiterpartikel, die mit dem dielektrischen Film beschichtet sind, auf das Substrat aufweist.

3. Verfahren zum Herstellen eines Kondensators, das Verfahren mit:
dem Herstellen eines abgeschiedenen Films gemäß dem Verfahren nach Anspruch 1, und
dem Einfügen des abgeschiedenen Films, der aus den Leiterpartikeln ausgebildet ist, die auf dem Substrat befestigt sind, zwischen Elektroden.

4. Abgeschiedener Film, der aus Leiterpartikeln gebildet ist, wobei die gesamte Oberfläche von jedem der Leiterpartikel mit einem dielektrischen Film beschichtet ist, wobei die Leiterpartikel auf ein Substrat aufgetroffen sind, so dass die Leiterpartikel an dem Substrat befestigt wurden, **dadurch gekennzeichnet, dass** die Leiterpartikel des abgeschiedenen Films plastisch verformt sind und dass der dielektrische Film, der an der Oberfläche der Leiterpartikel gebildet ist, nicht zerbrochen ist, so dass die gesamte Oberfläche der Leiterpartikel mit dem dielektrischen Film bedeckt bleibt.

5. Abgeschiedener Film nach Anspruch 4, bei dem dielektrische Partikel zwischen den Leiterpartikeln vorgesehen sind.

6. Abgeschiedener Film nach Anspruch 5, bei dem eine mittlere Partikelgröße der dielektrischen Partikel kleiner ist als eine mittlere Partikelgröße der Leiterpartikel.

7. Kondensator, bei dem der abgeschiedene Film nach einem der Ansprüche 4, 5 oder 6 zwischen Elektroden eingefügt ist.

8. Kondensator nach Anspruch 7, bei dem eine Dicke des abgeschiedenen Films weniger als 400 µm ist.

9. Elektronische Einrichtung, die den Kondensator nach Anspruch 7 enthält.

10. Verfahren zum Herstellen eines Verbundmaterials aus einem Leiter und einem Dielektrikum mit:
dem Zusammendrücken von Leiterpartikeln, wobei die gesamte Oberfläche von jedem der Leiterpartikel mit einem dielektrischen Film bedeckt ist, um die Leiterpartikel aneinander zu befestigen, **dadurch gekennzeichnet, dass** die Leiterpartikel zu einem solchen Grad plastisch verformt werden, dass der dielektrische Film, der auf der Oberfläche der Leiterpartikel gebildet ist, nicht zerbrochen wird, so dass die gesamte Oberfläche der Leiterpartikel mit dem dielektrischen Film bedeckt bleibt.

11. Verfahren nach Anspruch 10, bei dem das Verbundmaterial zum Bilden eines Kondensators dient, das Verfahren ferner mit:
dem Einfügen eines Strukturkörpers, der aus dem Verbundmaterial gebildet ist, das an einem Substrat befestigt ist, zwischen Elektroden.

12. Verbundmaterial, das aus Leiterpartikeln ausgebildet ist, wobei die gesamte Oberfläche der Leiterpartikel mit einem dielektrischen Film bedeckt ist, wobei die Leiterpartikel zusammengedrückt wurden, um die Leiterpartikel aneinander zu befestigen, **dadurch gekennzeichnet, dass** die Leiterpartikel des Verbundmaterials plastisch zu einem solchen Grad verformt wurden, dass der dielektrische Film, der auf der Oberfläche der Leiterpartikel gebildet ist, nicht zerbrochen ist, so dass die gesamte Oberfläche der Leiterpartikel mit dem dielektrischen Film bedeckt bleibt.

13. Kondensator, bei dem das Verbundmaterial nach Anspruch 12 an einem Substrat befestigt und zwischen Elektroden eingefügt ist.

## Revendications

1. Procédé de fabrication d'un film déposé, comprenant :
l'accélération de particules de conducteur par éjection des particules de conducteur ensemble avec un gaz, dans lequel la surface entière de chacune des particules de conducteur est recouverte avec un film diélectrique ;
la fixation des particules de conducteur à un substrat par collision des particules de conducteur avec le substrat pour former ledit film déposé, **caractérisé en ce que** les particules de conducteur sont plastiquement déformées pendant la collision avec le substrat à un degré tel que le film diélectrique formé sur la surface des particules de conducteur n'est pas fracturé de sorte que la surface entière des particules de conducteur reste recouverte avec le film diélectrique.

2. Procédé de fabrication d'un film déposé selon la revendication 1, dans lequel l'éjection des particules de conducteur comprend l'éjection de particules diélectriques avec les particules de conducteur qui sont recouvertes avec le film diélectrique, et la collision des particules de conducteur comprend la collision des particules diélectriques et des particules de conducteur qui sont recouvertes avec le film diélectrique avec le substrat.

3. Procédé de fabrication d'un condensateur, le procédé comprenant :
la fabrication d'un film déposé selon le procédé de la revendication 1, et
la mise en sandwich du film déposé formé des particules de conducteur fixées au substrat entre des électrodes.

4. Film déposé formé de particules de conducteur, la surface entière de chacune des particules de conducteur étant recouverte d'un film diélectrique, lesquelles particules de conducteur sont entrées en collision avec un substrat afin de fixer les particules de conducteur au substrat, **caractérisé en ce que** les particules de conducteur du film déposé sont plastiquement déformées et **en ce que** le film diélectrique formé sur la surface des particules de conducteur n'est pas fracturé de sorte que la surface entière des particules de conducteur reste recouverte avec le film diélectrique.

5. Film déposé selon la revendication 4, dans lequel des particules diélectriques sont fournies entre les particules de conducteur.

6. Film déposé selon la revendication 5, dans lequel une taille moyenne de particule des particules diélectriques est inférieure à une taille moyenne de particule des particules de conducteur.

7. Condensateur dans lequel le film déposé selon la revendication 4, 5 ou 6 est mis en sandwich entre des électrodes.

8. Condensateur selon la revendication 7, dans lequel une épaisseur du film déposé est inférieure à 400 µm.

9. Dispositif électronique portant le condensateur selon la revendication 7.

10. Procédé de fabrication d'un matériau composite d'un conducteur et d'un diélectrique, comprenant :
la compression de particules de conducteur, la surface entière de chacune des particules de conducteur étant recouverte d'un film diélectrique, afin de fixer les particules de conducteur les unes aux autres, **caractérisé en ce que** les particules de conducteur sont plastiquement déformées à un degré tel que le film diélectrique formé sur la surface des particules de conducteur n'est pas fracturé de sorte que la surface entière des particules de conducteur reste recouverte avec le film diélectrique.

11. Procédé selon la revendication 10, dans lequel le matériau composite est destiné à former un condensateur, le procédé comprenant de plus :
la mise en sandwich d'un corps structurel formé du matériau composite fixé à un substrat entre des électrodes.

12. Matériau composite formé de particules de conducteur, la surface entière des particules de conducteur étant recouverte avec un film diélectrique, lesquelles particules de conducteur ont été compressées afin de fixer les particules de conducteur les unes aux autres, **caractérisé en ce que** les particules de conducteur du matériau composite sont plastiquement déformées à un degré tel que le film diélectrique formé sur la surface des particules de conducteur n'est pas fracturé de sorte que la surface entière des particules de conducteur reste recouverte avec le film diélectrique.

13. Condensateur dans lequel le matériau composite selon la revendication 12 est fixé à un substrat et mis en sandwich entre des électrodes.
